# EUROPÄISCHE PATENTSCHRIFT

(11) **EP 2 763 820 B1**
(45) Veröffentlichungstag und Bekanntmachung des Hinweises auf die Patenterteilung: **19.08.2015**
(21) Anmeldenummer: 12778264.7
(22) Anmeldetag: 08.10.2012
(51) Int. Cl.: B25J 15/02

(54) **GREIF- ODER SPANNVORRICHTUNG**
GRIPPING OR CLAMPING DEVICE
DISPOSITIF DE PRÉHENSION OU DE SERRAGE

(30) Priorität: 07.10.2011 DE 102011084177
(43) Veröffentlichungstag der Anmeldung: 13.08.2014
(73) Patentinhaber: Schunk GmbH & Co. KG Spann- und Greiftechnik, 74348 Lauffen am Neckar (DE)
(72) Erfinder: SCHUSTER Andreas, 71543 Wüstenrot/Neulautern (DE); DRAB Michael, 73033 Göppingen (DE); QUAAS Matthias, 74232 Abstatt Happenbach (DE)
(74) Vertreter: DREISS Patentanwälte PartG mbB
(86) Internationale Anmeldenummer: PCT/EP2012/069884
(87) Internationale Veröffentlichungsnummer: WO 2013/050607

(56) Entgegenhaltungen:
- DE-A1- 10 013 022
- DE-A1- 19 604 649
- US-A1- 2008 179 838
- US-B1- 6 331 758

## Beschreibung

Die Erfindung betrifft eine Greif- oder Spannvorrichtung zum Greifen oder Spannen von Gegenständen, mit einem Stellglied und einem das Stellglied antreibenden Antrieb, mit wenigstens einer mit dem Stellglied bewegungsgekoppelten, über eine Backenführung entlang eines Grundteils verfahrbaren Backe, wobei zwischen dem Stellglied und der Backe ein Getriebe vorgesehen ist.

Derartige Greif- oder Spannvorrichtungen sind aus dem vorbekannten Stand der Technik in vielfältiger Art und Weise bekannt. Beispielsweise offenbart die DE 196 04 649 oder die DE 100 13 022 derartige Greif- oder Spannvorrichtungen. Bei diesen Greif- oder Spannvorrichtungen ist der Antrieb als pneumatischer Antrieb ausgebildet und das Getriebe als Schrägzuggetriebe.

Aus der DE 10 2008 035 021 A1 ist eine Greif- oder Spannvorrichtung bekannt geworden, bei der der Antrieb ein pneumatischer Antrieb ist und bei dem das Getriebe als Kniehebelgetriebe ausgebildet ist, wobei der Antrieb einen Kolben und eine Kolbenstange umfasst und zwischen dem Kolben und der Kolbenstange ein Ausgleichsmittel vorgesehen ist. Ein anderer Greifer ist aus der US 6,331,758 B1 bekannt.

Der vorliegenden Erfindung liegt nun die Aufgabe zugrunde, den vorbekannten Stand der Technik weiterzubilden. Insbesondere hat sich herausgestellt, dass gerade beim Greifen von gleichbleibenden Werkstückabmessungen das Getriebe und die Backen stets an den gleichen Stellen impulsartig belastet werden. Dies führt zu einem erhöhten Verschleiß, der vermieden werden soll.

Diese Aufgabe wird durch eine Greifstellung der Spannvorrichtung mit den Merkmalen des Anspruchs 1 gelöst.

Dadurch wird gewährleistet, dass beim Greifen oder Spannen von Werkstücken mit gleicher Werkstückabmessung die miteinander zusammenwirkenden Teile des Getriebes und/oder der Backe aufgrund des Dämpfungselements geringeren impulsartigen Kräften, und damit geringerem Verschleiß, ausgesetzt sind. Dadurch, dass eine Relativbewegung zwischen dem Backengrundkörper und dem Kraftleitabschnitt in Kraftübertragungsrichtung möglich ist, und durch Vorsehen des Dämpfungselements zwischen dem Backengrundkörper und dem Kraftleitabschnitt werden auftretende Kraftimpulse abgedämpft. Ein weiterer Vorteil der Greif- oder Spannvorrichtung ist insbesondere der, dass das Dämpfungselement nicht antriebsseitig vorgesehen ist, so dass die Greif- oder Spannvorrichtung mit unterschiedlichen Antrieben, wie beispielsweise einem pneumatischen Antrieb oder einem elektrischen Antrieb, verwendet werden kann.

Vorteilhafterweise ist vorgesehen, dass der Kraftleitabschnitt unter Vorspannung des Dämpfungselements am Grundkörper angeordnet ist. Dadurch kann erreicht werden, dass bis zur Überwindung der Vorspannkraft der Kraftleitabschnitt synchron zum Grundkörper bewegt wird. Erst bei Überschreiten der Vorspannkraft tritt eine Relativbewegung zwischen Kraftleitabschnitt und Grundkörper ein.

Vorzugsweise ist das Dämpfungselement als Elastomerdämpfer, insbesondere als Elastomerblock, Elastomerkugel, Elastomerzylinder, Elastomerring oder Elastomerschlauch ausgebildet. Der Elastomerdämpfer kann beispielsweise am Grundkörper und/oder den Kraftleitabschnitt angegossen sein. Denkbar ist auch, dass der Grundkörper und/oder der Kraftleitabschnitt wenigstens abschnittsweise in den Elastomerdämpfer eingegossen sind.

Allerdings ist auch denkbar, dass das Dämpfungselement als Federelement, insbesondere als Schraubenfeder oder Tellerfeder, ausgebildet sein kann. Ebenso ist denkbar, dass das Dämpfungselement als pneumatischer oder hydraulischer Stoßdämpfer ausgebildet ist.

Vorteilhafterweise sind am Grundkörper Führungsabschnitte zur Führung der Bewegung des Kraftleitabschnitts vorgesehen. Dadurch wird eine vorgegebene Bewegungsbahn des Kraftleitabschnitts bezüglich des Grundkörpers gewährleistet.

Besonders vorteilhaft ist, wenn ein Verstellmittel zur Verstellung der Vorspannung des Dämpfungselements und/oder des Kraftleitabschnitts gegenüber dem Grundkörper vorgesehen ist. Dadurch wird beispielsweise eine Einstellung der Backen ermöglicht, da dann der Kraftleitabschnitt in Kraftübertragungsrichtung relativ zum Grundkörper verlagerbar ist. Die Verstellung kann dabei auch entgegen der Vorspannung des Dämpfungselements erfolgen. Beispielsweise können hierzu entsprechend angeordnete Verstellschrauben Verwendung finden. Die Verstellschrauben können insbesondere mit ihrem freien Ende mittelbar oder unmittelbar, beispielsweise über das Dämpfungselement, gegen den Kraftleitabschnitt wirken.

Eine besonders bevorzugte Ausführungsform der Erfindung sieht vor, dass das Stellglied als um eine Drehachse verdrehbares Ritzel ausgebildet ist, dass das Getriebe vom Ritzel und von wenigstens einem backenseitigen Zahnstangenabschnitt gebildet wird und dass die Backe den Backengrundkörper und den den Kraftleitabschnitt bildenden Zahnstangenabschnitt umfasst. Bei dieser Ausführungsform ist als Antrieb insbesondere ein Elektromotor denkbar. Dabei ist denkbar, dass dessen Welle unmittelbar das sich drehende Ritzel aufweist. Allerdings ist auch denkbar, dass der Antrieb neben dem Elektromotor ein Zusatzgetriebe umfasst, an dessen Abtriebswelle dann das Ritzel, welches mit dem Zahnstangenabschnitt zusammenwirkt, vorgesehen ist. Aufgrund des Vorsehens des Dämpfungselements zwischen dem Backengrundkörper und dem Zahnstangenabschnitt kann hier eine Relativbewegung zwischen dem Zahnstangenabschnitt und dem Backengrundkörper ermöglicht werden.

Vorteilhafterweise weist der Zahnstangenabschnitt zwei einander gegenüberliegende, sich quer zur Bewegungsrichtung des Spannelements erstreckende Schmalseiten auf, die jeweils mit einem Dämpfungselement zusammenwirken. Dabei ist denkbar, dass der Grundkörper eine taschenartige Ausnehmung zur Aufnahme des Zahnstangenabschnitts aufweist. Die Aufnahme kann einander gegenüberliegende, quer zur Bewegungsrichtung des Spannelements verlaufende Stützabschnitte aufweisen, gegen welche die Dämpfungselemente wirken. Vorteilhafterweise ist der Zahnstangenabschnitt durch die Dämpfungselemente unter Vorspannung in der taschenartigen Ausnehmung angeordnet.

Ferner ist denkbar, dass das Verstellmittel in Form von Verstellschrauben vorgesehen sind, welche am Stützabschnitt angebracht sind und gegen die Dämpfungselemente, welche wiederum gegen den Zahnstangenabschnitt wirken. Dabei kann ferner vorteilhaft sein, wenn das Ritzel mittig zwischen zwei einander gegenüberliegenden Backen mit einander zugewandten Zahnstangenabschnitten angeordnet ist. Beide Zahnstangenabschnitte sind dann über Dämpfungselemente am jeweiligen Grundkörper, relativ zum Grundkörper bewegbar, angeordnet.

Dabei ist vorteilhaft, wenn die Backenführung im Bereich zwischen den Backen vorgesehene Lagerrollen derart aufweist, dass die Drehachsen der Lagerrollen parallel zur Ritzeldrehachse verlaufen. Hierdurch kann eine sehr kompakte Bauweise erzielt werden, da sich die Backen über die Lagerrollen gegenseitig abstützen. Ferner verringern sich auch auftretende Querkräfte. Dadurch kann die Greif- oder Spannvorrichtung insgesamt vergleichsweise kompakt bauen.

Durch das Vorsehen von zwei einander gegenüberliegende Backen, wobei das Ritzel mittig zwischen den Backen angeordnet ist, können synchrone Kräfte beim Aufeinander-zu- beziehungsweise Voneinander-weg-Bewegen der Backen erzielt werden.

Ferner kann vorgesehen sein, dass die Drehachsen der Lagerrollen und die Ritzeldrehachse in einer Achsebene liegen. Auch dies trägt zu einer kompakten Bauweise bei. Vorzugsweise bildt dabei die Achsebene die Mittelebene zwischen den Backen. Auch dies führt zu einer vorteilhaften Kraftableitung bei kleinem Bauraum.

Ferner ist vorteilhaft, wenn die senkrecht zur Ritzeldrehachse verlaufende Mittellängsebene der Lagerrollen in der oder im Bereich der Mittelquerachse des Ritzels liegt. Auch dies führt zu einer vorteilhaften Kraftableitung bei kleinem Bauraum.

Vorzugsweise ist zwischen dem Ritzel und den Lagerrollen ein Schutzelement vorhanden ist, das einen Kontakt des Ritzel mit den Lagerrollen verhindert. Das Schutzelement kann dabei kappenartig ausgebildet sein und das Ritzel zumindest teilweise abdecken.

Vorteilhafterweise ist zudem vorgesehen, dass die Backenführun^{g} zwei einander abgewandte, parallel zur Ritzeldrehachse verlaufende, backenseitige Führungsflächenabschnitte und damit zusammenwirkende, grundteilseitige Gegenführungsflächen umfasst. Die Backenführung wird folglich unter anderem von zwei, vorzugsweise parallel zueinander verlaufenden Seiten, die jeweils von einer Backe gebildet werden, und von den grundteilseitigen Gegenführungsflächen gebildet.

Dabei ist vorteilhaft, wenn zwischen den Führungsflächenabschnitten und den Gegenführungsflächen Rollenführungen und vorzugsweise Kreuzrollenführungen vorgesehen sind. Über diese Rollenführungen können zum einen Kräfte gut übertragen werden. Zum anderen ist eine leichtgängige Bewegung zwischen den Backen und dem Grundteil möglich. Ferner können dabei zwischen dem Ritzel und den Backen, senkrecht zur Ritzeldrehachse verlaufende Kräfte, vorhanden sein, um ein gegenseitiges Abstützen der Backen über die Lagerrollen und ein Anliegen der Backen am Ritzel unter geeigneter Vorspannung zu erreichen. Dabei sind insbesondere die Rollenführungen und die Lagerrollen derart aufeinander abgestimmt, dass die Backen in Querrichtung unter Vorspannung angeordnet sind.

Bei einer weiteren Ausgestaltung der Erfindung ist denkbar, dass als Backenführung für jede Backe eine eigene Backenführung vorgesehen ist, die jeweils eine Führungsnut und einen damit zusammenwirkenden Führungssteg umfasst. Dies hat den Vorteil, dass die Backen unabhängig voneinander entsprechend geführt werden können. Zwischen der Führungsnut und dem Führungssteg ist denkbar, entsprechende Gleit- oder Lagermittel vorzusehen. Die Führungsnut ist dabei vorzugsweise an der Backe und der Führungssteg am Grundteil angeordnet. Allerdings ist auch denkbar, dass der Führungssteg an der Backe und die Führungsnut am Grundteil vorgesehen ist.

Der Führungssteg kann dabei zwei einander gegenüberliegende Führungsflächenabschnitte aufweisen, die im Wesentlichen parallel zur Ritzeldrehachse verlaufen. Hierdurch können senkrecht zur Ritzeldrehachse verlaufende Kräfte vorteilhaft in das Grundteil abgeleitet werden. Die Führungsflächenabschnitte schneiden dann vorteilhafterweise die Mittelquerachse des Ritzels. Der Führungssteg kann vorteilhafterweise im Querschnitt rechteckig oder dreieckig oder sonst beliebig anders ausgebildet sein, wobei dann die Führungsflächenabschnitte beziehungsweise die Gegenführungsflächen entsprechend ausgebildet sind.

Bei einer anderen Ausführungsform ist vorgesehen, dass das Stellglied als linear verstellbarer Schrägzugnocken ausgebildet ist, dass das Getriebe als Schrägzuggetriebe ausgebildet ist und einen schrägzugnockenseitigen Schrägzugabschnitt und einen backenseitigen Schrägzugführungsabschnitt umfasst.

Dabei umfasst die Backe den Backengrundkörper und den den Kraftleitabschnitt bildenden Schrägzugführungsabschnitt. Aufgrund der möglichen Relativbewegung des Schrägzugführungsabschnitts gegenüber den Backengrundkörpern können auftretende Kraftimpulse entsprechend abgedämpft werden.

Bei einer weiteren Ausführungsform ist vorgesehen, dass das Getriebe als Kniehebelgetriebe ausgebildet ist und wenigstens einen stellgliedseitigen Antriebsabschnitt und einen backenseitigen Gegenabschnitt sowie einen Drehgelenkabschnitt umfasst, wobei der Antriebsabschnitt, der Gegenabschnitt und/oder der Drehgelenkabschnitt als Kraftleitabschnitt ausgebildet ist. Auch hierdurch kann eine bedingte Relativbewegung des Kraftleitabschnitts zum Abbau von impulsartig auftretenden Kräften erreicht werden.

Weitere Vorteile und vorteilhafte Ausgestaltungen der Erfindung sind der nachfolgenden Beschreibung zu entnehmen, anhand derer verschiedene Ausführungsformen der Erfindung näher beschrieben und erläutert sind.

Es zeigen:
Figur 1 die Vorderansicht einer ersten erfindungsgemäßen Greifvorrichtung;
Figur 2a einen Schnitt durch die Greifvorrichtung gemäß Figur 1 entlang der Linie IIa;
Figur 2b einen Schnitt durch die Greifvorrichtung gemäß Figur 1 entlang der Linie IIb;
Figur 3 einen Längsschnitt durch die Greifvorrichtung gemäß Figur 1;
Figur 4 eine Draufsicht auf die Greifvorrichtung gemäß Figur 1; und
Figur 5 einen Längsschnitt durch eine zweite erfindungsgemäße Greifvorrichtung.

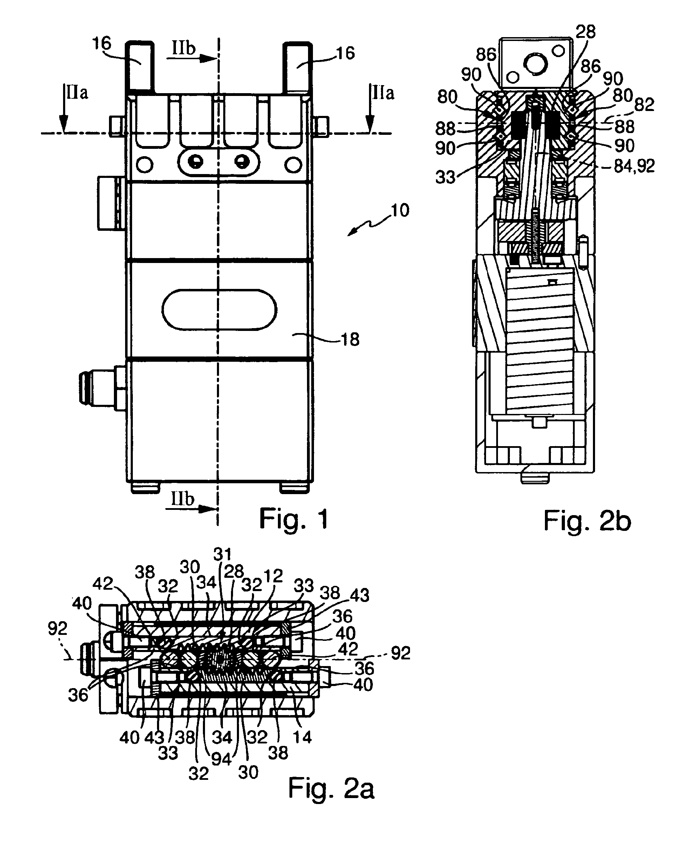

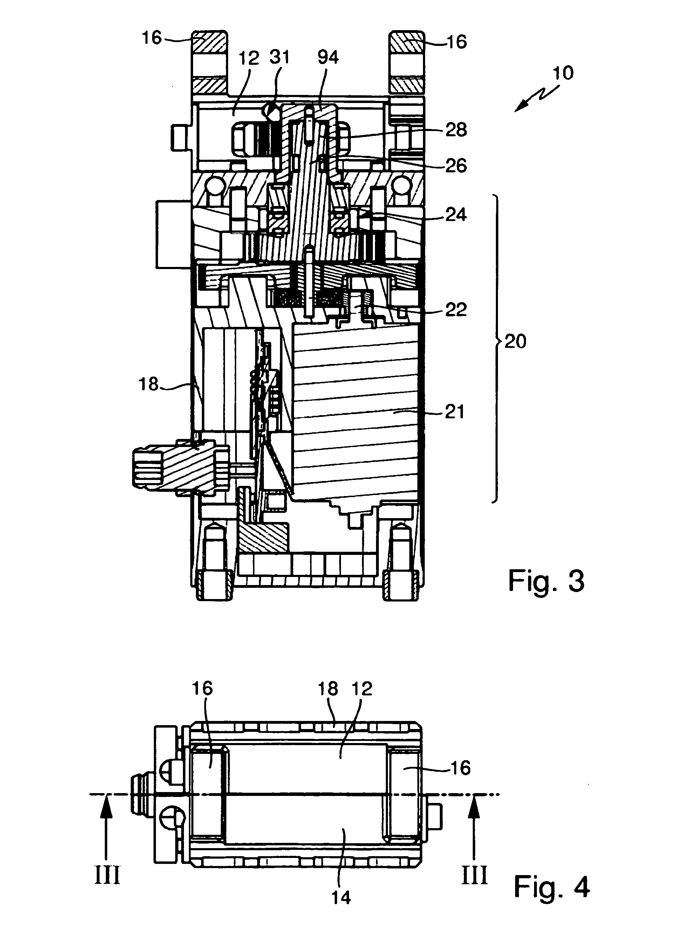

Die in den Figuren 1 bis 4 gezeigte Greifvorrichtung 10 umfasst zwei Backen 12 und 14, welche aufeinander zu und voneinander weg bewegbare Spannabschnitte 16 umfassen. Wie aus insbesondere dem Schnitt gemäß Figur 2a und 3 hervorgeht, umfasst die Greifvorrichtung 10 ein in einem Grundteil 18 angeordneten Antrieb 20.

Der Antrieb 20 wird von einem Elektromotor 21 und einem dem Elektromotor 21 nachgeschalteten mehrstufigen Stirnradgetriebe 24 gebildet. Dazu weist der Elektromotor 21 eine Antriebswelle 22 auf, die mit dem Antriebsgetriebe 24 gekoppelt ist. Das Antriebsgetriebe 24, beziehungsweise der Antrieb 20, weist eine Abtriebswelle 26 auf, welche über ein Getriebe 31 mit den Spannmitteln 12 und 14 bewegungsgekoppelt ist. Das Getriebe 31 wird dabei von einem an der Abtriebswelle 26 vorgesehenen Stellglied in Form eines Ritzels 28 und von spannmittelseitigen Krafteinleitabschnitten in Form von Zahnstangenabschnitten 30 gebildet. Wie aus dem Schnitt gemäß Figur 2a deutlich wird, sind zwei einander gegenüberliegende Zahnstangenabschnitte 30 vorgesehen. Das Ritzel 28 ist dabei mittig zwischen den Zahnstangenabschnitten 30 angeordnet und kämmt beide Zahnstangenabschnitte 30.

Wie ebenfalls aus Figur 2a deutlich wird, wird jede Backe 12, 14 von einem Grundkörper in Form eines Backengrundkörpers 33 und einem Kraftleitabschnitt in Form eines Zahnstangenabschnitts 30 gebildet. Dabei weisen die Zahnstangenabschnitte 30 jeweils zwei einander gegenüberliegende, sich quer zur Bewegungsrichtung des jeweiligen Spannelements 12, 14 erstreckende Schmalseiten 32 auf. Die Zahnstangenabschnitte 30 sind zudem jeweils in taschenartigen Ausnehmungen 34 des jeweiligen Backengrundkörper 33 angeordnet. In Längsrichtung werden diese Ausnehmungen 34 von Stützabschnitten 36 begrenzt. Zwischen den backsenseitigen Stützabschnitten 36 und den Zahnstangenabschnitten 30 beziehungsweise deren Schmalseiten 32, sind jeweils Dämpfungselemente 38 in Form von Elastomerzylindern oder -kugeln vorgesehen. Aufgrund des Vorsehens der Dämpfungselemente 38 wird erreicht, dass die Zahnstangenabschnitte 30 gegenüber den Backengrundkörpern 33 in Kraftübertragungsrichtung elastisch nachgiebig verschiebbar angeordnet sind. Hierdurch kann erreicht werden, dass über die Backen 12, 14 in die Greifvorrichtung 10 eingeleitete Kraftimpulse von den Dämpfungselementen 38 gedämpft werden. Insgesamt wird hierdurch Verschleiß reduziert.

Die Zahnstangenabschnitte 30 sind durch Vorsehen der Dämpfungselemente 38 in Bewegungsrichtung der Backen 12, 14 unter Vorspannung an den Backegrundkörpern 33 angeordnet.

Wie ebenfalls aus insbesondere Figur 2a deutlich wird, sind an den Stützabschnitten 36 der Backengrundkörper 33 in Bewegungsrichtung verstellbare Verstellschrauben 40 vorgesehen, die einen axialen Anschlag 43 in Form einer Scheibe für zwischen den einander zugewandten Seiten der Zahnstangenabschnitte 30 vorgesehene Lagerollen 42, insbesondere Nadellagerrollen, bilden. Zudem ist denkbar, dass über die Verstellschrauben 40 die relative Lage der Zahnstangenabschnitte 30 bezüglich der Backengrundkörper 33 verstellbar sind. Hierdurch können zum einen Fertigungstoleranzen ausgeglichen werden. Zudem kann die jeweilige Hubendlage der Spannmittel 12, 14 bedingt eingestellt werden.

Zwischen dem Ritzel 28 und den Lagerrollen 42 ist ein kappenartig ausgebildetes Schutzelement 94 vorhanden, das einen Kontakt des Ritzels 28 mit den Lagerrollen 42 verhindert. Wie aus Figur 3 deutlich wird, ist das Schutzelement 94 entsprechend einer Kappe auf das Ritzel 28 aufgesetzt und deckt es an seiner Oberseite ab. Auf der den Zahnstangenabschnitten 30 zugewandten Seite ist das Schutzelement 94 offen, so dass das Ritzel 28 mit den Zahnstangenabschnitten 30 zusammen wirken kann.

Zur Bewegungsführung der Zahnstangenabschnitte 30 bezüglich der Backengrundkörper 33 sind entsprechende Führungen, welche in den Figuren nicht zu erkennen sind, vorgesehen. Ferner sind zur positionsgenauen Anordnung der kugelförmigen Dämpfungselemente 38 an den Schmalseiten 32 der Zahnstangenabschnitte 30 konusartige Ausnehmungen vorgesehen.

Treffen nun beim Greifvorgang die Backen 12, 14, beziehungsweise deren Spannabschnitte 16, auf den zu greifenden Gegenstand, so treten, je nach Geschwindigkeit der Spannmittel 12, 14 und der Antriebskraft des Antriebs 20, Kraftimpulse innerhalb der Greifvorrichtung 10 auf. Durch das Vorsehen der Dämpfungselemente 38 zwischen den Backengrundkörpern 33 und den Zahnstangenabschnitten 30 können diese Kraftimpulse abgedämpft werden.

Aus insbesondere den Schnitten gemäß Figur 2a und 2b wird deutlich, dass die Backen mittels einer Backenführung 80 entlang des Grundteils 18 in Bewegungsrichtung geführt werden. Die Backenführung 80 umfasst zwei einander abgewandte, backenseitige Führungsabschnitte 86 und damit zusammenwirkenden, grundteilseitige Gegenführungsflächen 88. Wie insbesondere aus dem Schnitt gemäß Figur 2b deutlich wird, sind zwischen den Führungsabschnitten 86 und den Gegenführungsflächen 88 Kreuzrollen 90 vorgesehen. Dabei sind Kreuzrollen 90 jeweils entlang zweier parallel verlaufender Linien entlang der Bewegungsrichtung der Backen 12 und 14 angeordnet sind. Wie bereits erwähnt sind zwischen den Backen 12, 14 die Lagerrollen 42 vorgesehen. Die Kreuzrollen 90 und die Lagerrollen 42 sind dabei derart aufeinander abgestimmt, dass die Backen 12, 14 in Querrichtung unter Vorspannung zwischen den die Gegenführungsflächen 88 vorsehenden Abschnitten des Grundteils 18 angeordnet sind. Zudem wird gewährleistet, dass das Ritzel 28 die Zahnstangenabschnitte 30 funktionssicher kämmt.

Ferner wird deutlich, dass die Lagerrollen 42 der Backenführung 80 derart angeordnet sind, dass die Drehachsen der Lagerrollen parallel zur Ritzeldrehachse 84 verlaufen. Die Drehachsen der Lagerrollen 42 und die Ritzeldrehachse 84 liegen dabei in einer in Figur 2a erkennbaren Achsebene 92, wobei die Achsebene 92 die Mittelebene zwischen den Backen 12, 14 bildet.

Wie insbesondere aus dem Schnitt gemäß Figur 2b deutlich wird, liegt die Mittelquerebene der Lagerrollen 42 in der Mittelquerebene 82 des Ritzels 28. Die Mittelquerebene 82 des Ritzels 28 verläuft senkrecht zur Drehachse 84 des Ritzels 28 beziehungsweise der Abtriebswelle 26. Dabei verläuft die Mittelquerebene 82 zudem zwischen dem jeweils entlang einer Linie vorgesehenen Kreuzrollen 90 senkrecht zur. Ritzeldrehachse 84. Hierdurch wird erreicht, dass zwischen der Backenführung 80 und dem Ritzel 28, beziehungsweise den Zahnstangenabschnitten 30, im Wesentlichen nur Kräfte übertragen werden, die in der Ebene 82 liegen und keine in Richtung der Ritzeldrehachse 84 verlaufende Kraftkomponenten aufweisen. Dadurch kann die Vorrichtung 10 vergleichsweise kompakt bauen; dennoch können vergleichsweise hohe Kräfte übertragen werden.

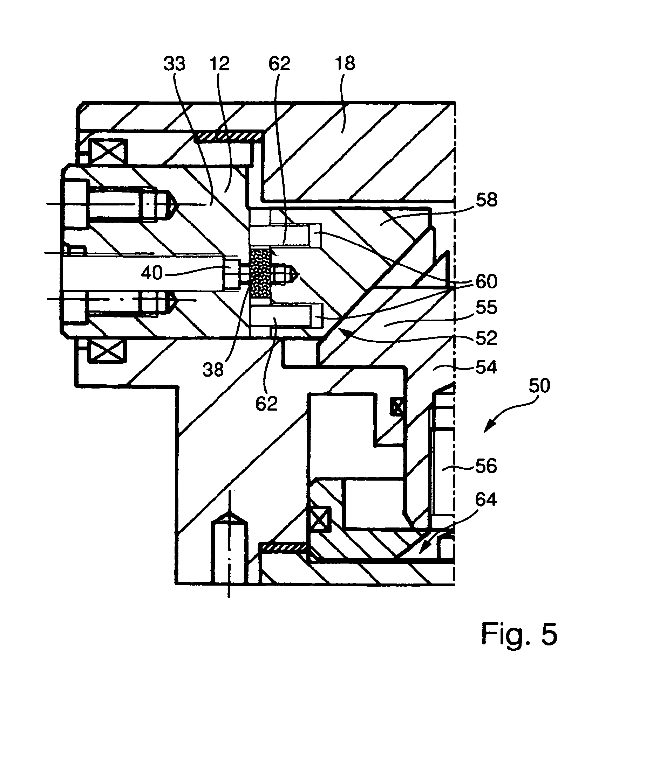

In der Figur 5 ist die linke Hälfte einer Greifvorrichtung 50 dargestellt, wobei Figur 5 der Figur 1 der DE 196 04 649 C2 entspricht. Insofern wird im Hinblick auf die Funktionsweise der in Figur 5 dargestellten Greifvorrichtung 50 auf die genannte Druckschrift verwiesen. In der Figur 5 werden allerdings den Bauteilen der Greifvorrichtung 10 gemäß Figur 1 bis 4 entsprechende Bezugszeichen für entsprechende Bauteile verwendet. Die Greifvorrichtung 50 weist einen Antrieb 64 in Form einer ZylinderKolben-Einheit auf, die an ihrer den Backen zugewandten Seite eine Kolbenstange 56 mit einem ein Stellglied bildenden Schrägzugnocken 54 aufweist. Ferner ist als Getriebe zwischen dem Schrägzugnocken 54 und den Backen 12 und 14 ein Schrägzuggetriebe 52 vorgesehen. Der Schrägzugnocken 54 weist dabei einen Schrägzugabschnitt 55 auf, der mit backenseitigen Schrägzugführungsabschnitten 58 zusammen wirkt. Dadurch wird die Axialbewegung des Nockens 54 in eine quer dazu verlaufende Bewegung der Backen 12 und 14 umgelenkt.

Die in der Figur 5 dargestellte Greifvorrichtung 50 unterscheidet sich nun von der in der DE 196 04 649 C2, dort in Figur 1, dargestellten Greifvorrichtung dadurch, dass die Backe 12einen einen Grundkörper bildenden Backengrundkörper 33 und den den Kraftleitabschnitt bildenden Schrägzugführungsabschnitt 58 umfasst. Dabei ist zwischen Backengrundkörper 33 und dem Schrägzugführungsabschnitt 58 ein Dämpfungselement 38 in Form eines Elastomerblocks vorgesehen ist. Das Dämpfungselement 38 lässt dabei eine elastische Nachgiebigkeit in Kraftübertragungsrichtung zu. Zur positionsgenauen Führung weist der Schrägzugführungsabschnitt 58 Führungsabschnitte 60 auf, die mit an dem Backengrundkörper 33 vorgesehenen Gegenabschnitten 62 zusammenwirken. Ferner ist eine Verstellschraube 40 vorgesehen, mit der das Dämpfungselement 38 in Bewegungsrichtung vorgespannt werden kann.

Mit der in Figur 5 gezeigten Vorrichtung 50 werden über die Backe 12 in die Greifvorrichtung 50 eingeleitete Kraftimpulse vom Dämpfungselement 38 gedämpft, was zu einem reduzierten Verschleiß führt.

Bei der Figur 5 ist das Dämpfungselement 38 sowie der Kraftleitabschnitt in Form des Schrägzugführungsabschnitts 58 backenseitig realisiert. Im Rahmen der Erfindung wäre allerdings auch denkbar, das Dämpfungselement 38 sowie den Kraftleitabschnitt am Schrägzugnocken 54 zu realisieren, so dass der der Kolbenstange 56 abgewandte Schrägzugabschnitt 55 den Kraftleitabschnitt bildet, und zwischen diesem und dem der Kolbenstange 56 zugewandten Nockengrundkörper das Dämpfungselement vorgesehen ist.

## Patentansprüche

1. Greif- oder Spannvorrichtung (10, 50) zum Greifen oder Spannen von Gegenständen, mit einem Stellglied (28, 54) und einem das Stellglied (28, 54) antreibenden Antrieb (20, 64), mit wenigstens einer mit dem Stellglied (28, 54) bewegungsgekoppelten, über eine Backenführung entlang eines Grundteils verfahrbaren Backe (12, 14), wobei zwischen dem Stellglied (28, 54) und der Backe (12, 14) ein Getriebe (31, 52) vorgesehen ist, wobei die vom Antrieb (20, 64) erzeugte Kraft über die Backe (12, 14) hin zum Gegenatand übertragen wird, **dadurch gekennzeichnet, dass** die Backe (12, 14) einen Backengrundkörper (33) und einen in Kraftübertragungsrichtung relativ dazu bewegbaren Kraftleitabschnitt (30, 58) umfasst, wobei zwischen dem Backengrundkörper (33) und dem Kraftleitabschnitt (30, 58) ein eine elastische Nachgiebigkeit zulassendes Dämpfungselement (38) vorgesehen ist.

2. Vorrichtung (10, 50) nach Anspruch 1, **dadurch gekennzeichnet, dass** der Kraftleitabschnitt (30, 58) unter Vorspannung des Dämpfungselements (38) am Backengrundkörper (33) angeordnet ist.

3. Vorrichtung (10, 50) nach Anspruch 1 oder 2, **dadurch gekennzeichnet, dass** das Dämpfungselement (38) als Elastomerdämpfer, insbesondere als Elastomerblock, -kugel, -ring oder schlauch ausgebildet ist.

4. Vorrichtung (10, 50) nach Anspruch 1, 2 oder 3, **dadurch gekennzeichnet, dass** der Backengrundkörper (33) Führungsabschnitte (62) zur Führung der Bewegung des Kraftleitabschnitts aufweist.

5. Vorrichtung (10, 50) nach einem der vorhergehenden Ansprüche, **dadurch gekennzeichnet, dass** Verstellmittel (40) zur Verstellung des Kraftleitabschnitts (30, 58) gegenüber dem Backengrundkörper (33) vorgesehen sind.

6. Vorrichtung (10) nach einem der vorhergehenden Ansprüche, **dadurch gekennzeichnet, dass** das Stellglied als um eine Drehachse verdrehbares Ritzel (28) ausgebildet ist, dass das Getriebe (31) vom Ritzel (28) und von wenigstens einem backenseitigen, den Kraftleitabschnitt bildenden Zahnstangenabschnitt (30) gebildet wird.

7. Vorrichtung (10) nach Anspruch 6, **dadurch gekennzeichnet, dass** der Zahnstangenabschnitt (30) zwei einander gegenüberliegende, sich quer zur Bewegungsrichtung des Spannelements (12, 14) erstreckende Schmalseiten (32) aufweist, die jeweils mit einem Dämpfungselement (38) zusammen wirken.

8. Vorrichtung (10) nach Anspruch 6 oder 7, **dadurch gekennzeichnet, dass** das Ritzel (28) mittig zwischen zwei einander gegenüberliegenden Spannmitteln (12, 14) mit einander zugewandten Zahnstangenabschnitten (30) angeordnet ist.

9. Vorrichtung (10) nach Anspruch 6, 7 oder 8, **dadurch gekennzeichnet, dass** die Backenführung (80) im Bereich zwischen den Backen (12, 14) vorgesehene Lagerrollen (42) derart aufweist, dass die Drehachsen der Lagerrollen parallel zur Ritzeldrehachse (84) verlaufen.

10. Vorrichtung (10) nach Anspruch 9, **dadurch gekennzeichnet, dass** die Drehachsen der Lagerrollen (42) und die Ritzeldrehachse (84) in einer Achsebene (92) liegen.

11. Vorrichtung (10) nach Anspruch 9 oder 10, **dadurch gekennzeichnet, dass** die Achsebene (92) die Mittelebene zwischen den Backen (12, 14) bildet.

12. Vorrichtung (10) nach Anspruch 9, 10 oder 11, **dadurch gekennzeichnet, dass** die senkrecht zur Ritzeldrehachse (84) verlaufende Mittellängsebene der Lagerrollen (80) in der oder im Bereich der Mittelquerebene (82) des Ritzels (28) liegt.

13. Vorrichtung (10) nach einem der Ansprüche 9 bis 12, **dadurch gekennzeichnet, dass** zwischen dem Ritzel und den Lagerrollen ein Schutzelement (94) vorhanden ist, das einen Kontakt des Ritzel (28) mit den Lagerrollen (42) verhindert.

14. Vorrichtung (50) nach einem der Ansprüche 1 bis 5, **dadurch gekennzeichnet, dass** das Stellglied als linear verstellbarer Schrägzugnocken (54) ausgebildet ist, dass das Getriebe (52) als Schrägzuggetriebe ausgebildet ist und einen schrägzugnockenseitigen Schrägzugabschnitt und einen backenseitigen, den Kraftleitabschnitt bildenden Schrägzugführungsabschnitt (58) umfasst.

15. Vorrichtung nach einem der Ansprüche 1 bis 5, **dadurch gekennzeichnet, dass** das Getriebe als Kniehebelgetriebe ausgebildet ist und wenigstens einen stellgliedseitigen Antriebsabschnitt und einen backenseitigen, den Kraftleitabschnitt bildenden Gegenabschnitt und einen Drehgelenkabschnitt umfasst.

## Claims

1. Gripping or clamping device (10, 50) for gripping or clamping objects, comprising an actuator (28, 54) and a drive (20, 64) for driving the actuator (28, 54), at least one jaw (12, 14) that is motionally coupled to the actuator (28, 54) and can be moved via a jaw guidance along a base body, wherein a transmission (31, 52) is provided between the actuator (28, 54) and the jaw (12, 14), wherein the force generated by the drive (20, 64) is transferred to the object by the jaw (12, 14), **characterized in that** the jaw (12, 14) comprises a base body (33) and a force conducting section (30, 58) that can be moved relative thereto in the force transmission direction, wherein an elastically compliant damping element (38) is provided between the base body (33) and the force conducting section (30, 58).

2. Device (10, 50) according to claim 1, **characterized in that** the force conducting section (30, 58) is arranged under pretension of the damping element (38) on the base body (33).

3. Device (10, 50) according to claim 1 or 2, **characterized in that** the damping element (38) is designed as an elastomeric damper, in particular, as elastomeric block, elastomeric ball, elastomeric ring or elastomeric hose.

4. Device (10, 50) according to claim 1, 2 or 3, **characterized in that** the base body (33) comprises guiding sections (62) for guiding the motion of the force conducting section.

5. Device (10, 50) according to any one of the preceding claims, **characterized in that** adjustment means (40) are provided for adjusting the force conducting section (30, 58) with respect to the base body (33).

6. Device (10) according to any one of the preceding claims, **characterized in that** the actuator is designed as a pinion (28) that can be rotated about an axis of rotation, the transmission (31) is formed by the pinion (28) and by at least one jaw-side rack section (30), wherein the jaw (12, 14) forms the force transmission element and comprises a jaw base body (33) forming the base body, and the rack section (30) forming the force conducting section.

7. Device (10) according to claim 6, **characterized in that** the rack section (30) has two opposite narrow sides (32) which extend transversely with respect to the direction of motion of the clamping element (12, 14) and each cooperate with one damping element (38).

8. Device (10) according to claim 6 or 7, **characterized in that** the pinion (28) is arranged in the center between two opposite clamping means (12, 14) with mutually facing rack sections (30).

9. Device (10) according to claim 6, 7, or 8, **characterized in that** the jaw guidance (80) has bearing rollers (42) in the area between the jaws (12, 14) such that the axes of rotation of the bearing rollers extend parallel with respect to the axis of rotation (84) of the pinion.

10. Device (10) according to claim 9, **characterized in that** the axes of rotation of the bearing rollers (42) and the axis of rotation (84) of the pinion are in one axial plane (92).

11. Device (10) according to claim 9 or 10, **characterized in that** the axial plane (92) forms the center plane between the jaws (12, 14).

12. Device ( 10) according to claim 9, 10, or 11, **characterized in that** the center longitudinal plane of the bearing rollers (80) which extends perpendicularly with respect to the axis of rotation (84) of the opinion lies in or in the area of the center transverse plane (82) of the pinion (28).

13. Device (10) according to any one of the claims 9 through 12, **characterized in that** a protective element (94) is provided between the pinion and the bearing rollers, which prevents contact between the pinion (28) and the bearing rollers (42).

14. Device (50) according to any one of the claims 1 through 5, **characterized in that** the actuator is designed as linearly adjustable slanted drive cam (54), the transmission (52) is designed as slanted drive transmission comprising a slanted drive section on the slanted drive cam side and a slanted drive guiding section (58) on the jaw side forming the force conducting section.

15. Device according to any one of the claims 1 through 5, **characterized in that** the transmission is designed as toggle mechanism and comprises at least one drive section on the actuator side and one counter section on the jaw side being formed as the force conducting section as well as a pivot joint section.

## Revendications

1. Dispositif de préhension ou de serrage (10, 50) conçu pour saisir ou serrer des objets, comprenant un actionneur (28, 54) et une commande (20, 64) commandant l'actionneur (28, 54), au moins une mâchoire (12, 14) couplée en mouvement avec l'actionneur (28, 54) et mobile le long d'un élément de base par le biais d'un guidage de mâchoire, une transmission (31, 52) étant prévue entre l'actionneur (28, 54) et la mâchoire (12, 14), la force générée par la commande (20, 64) étant transmise à l'objet par l'intermédiaire de la mâchoire (12, 14), **caractérisé en ce que** la mâchoire (12, 14) comprend un corps de base de mâchoire (33) et un élément de transmission de force (30, 58) mobile par rapport à ce dernier dans le sens de transmission de la force, un élément amortisseur (38) permettant une flexibilité élastique étant prévu entre le corps de base de mâchoire (33) et l'élément de transmission de force (30, 58).

2. Dispositif (10, 50) selon la revendication 1, **caractérisé en ce que** l'élément de transmission de force (30, 58) est agencé sur le corps de base de mâchoire (33) sous précontrainte de l'élément amortisseur (38).

3. Dispositif (10, 50) selon la revendication 1 ou 2, **caractérisé en ce que** l'élément amortisseur (38) est conçu comme un amortisseur élastomère, en particulier comme un bloc, une bille, une bague ou un tube élastomère.

4. Dispositif (10, 50) selon la revendication 1, 2 ou 3, **caractérisé en ce que** le corps de base de mâchoire (33) présente des sections de guidage (62) pour guider le mouvement de l'élément de transmission de force.

5. Dispositif (10, 50) selon l'une des revendications précédentes, **caractérisé en ce qu'**il est prévu des moyens de réglage (40) pour régler l'élément de transmission de force (30, 58) par rapport au corps de base de mâchoire (33) .

6. Dispositif (10) selon l'une des revendications précédentes, **caractérisé en ce que** l'actionneur est réalisé sous la forme d'un pignon (28) mobile en rotation autour d'un axe de rotation, et **en ce que** la transmission (31) est formée par le pignon (28) et par au moins un tronçon à crémaillère (30) formant l'élément de transmission de force.

7. Dispositif (10) selon la revendication 6, **caractérisé en ce que** le tronçon à crémaillère (30) présente deux côtés étroits (32) opposés s'étendant transversalement au sens de déplacement de l'élément de serrage (12, 14), lesquels côtés interagissent avec un élément amortisseur (38).

8. Dispositif (10) selon la revendication 6 ou 7, **caractérisé en ce que** le pignon (28) est agencé au milieu entre deux moyens de serrage opposés (12, 14) avec des tronçons à crémaillère (30) orientés l'un vers l'autre.

9. Dispositif (10) selon la revendication 6, 7 ou 8, **caractérisé en ce que** le guidage de mâchoire (80) présente des galets de roulement (42) prévus dans la zone entre les mâchoires (12, 14) de telle sorte que les axes de rotation des galets de roulement s'étendent parallèlement à l'axe de rotation du pignon (84).

10. Dispositif (10) selon la revendication 9, **caractérisé en ce que** les axes de rotation des galets de roulement (42) et l'axe de rotation du pignon (84) se trouvent dans un plan axial (92).

11. Dispositif (10) selon la revendication 9 ou 10, **caractérisé en ce que** le plan axial (92) forme le plan médian entre les mâchoires (12, 14).

12. Dispositif (10) selon la revendication 9, 10 ou 11, **caractérisé en ce que** le plan longitudinal médian des galets de roulement (80) s'étendant perpendiculairement à l'axe de rotation du pignon (84) se situe dans le plan transversal médian (82) ou dans la zone du plan transversal médian (82) du pignon (28).

13. Dispositif (10) selon l'une des revendications 9 à 12, **caractérisé en ce qu'**il est installé entre le pignon et les galets de roulement un élément de protection (94) qui empêche le contact du pignon (28) avec les galets de roulement (42).

14. Dispositif (50) selon l'une des revendications 1 à 5, **caractérisé en ce que** l'actionneur est réalisé sous la forme d'une came de traction oblique (54) réglable linéairement, **en ce que** la transmission (52) est réalisée sous la forme d'une transmission de traction oblique et comprend une section de traction oblique côté came de traction oblique et une section de guidage de traction oblique (58) formant l'élément de transmission de force.

15. Dispositif selon l'une des revendications 1 à 5, **caractérisé en ce que** la transmission est réalisée sous la forme d'une transmission à levier à genouillère et comprend au moins une section d'entraînement côté actionneur, et une contre-section côté mâchoire formant l'élément de transmission de force et une section d'articulation à charnière.
